# EUROPÄISCHE PATENTANMELDUNG

(11) **EP 1 515 028 A2**
(43) Veröffentlichungstag der Anmeldung: **16.03.2005**
(21) Anmeldenummer: 04021073.4
(22) Anmeldetag: 04.09.2004
(51) Int. Cl.: F02D 41/02, F01N 3/20, F01N 3/08, F01N 3/035

(54) **Verfahren zur Aufheizung eines Katalysators und/oder Partikelfilters in einer Abgasanlage und Katalysator, insbesondere ein Stickoxid-Speicherkatalysator**

(30) Priorität: 11.09.2003 DE 10341930
(71) Anmelder: AUDI AG, 85045 Ingolstadt (DE)
(72) Erfinder: Odendall, Bodo, 86633 Neuburg (DE); Burkardt, Armin, Dr., 63755 Alzenau (DE); Kamm, Stefan, Dr., 82467 Garmisch-Partenkirchen (DE); Boestfleisch, Volker, 63755 Alzenau (DE)
(74) Vertreter: Krah, Annette

(57) **Zusammenfassung**

Die Erfindung betrifft ein Verfahren zur Aufheizung eines in einer Abgasanlage (1) einer Diesel-Brennkraftmaschine (2) eines Fahrzeuges, insbesondere eines Kraftfahrzeuges, angeordneten Katalysators (5), insbesondere eines Stickoxid-Speicherkatalysators und/oder Partikelfilters, auf Desulfatisierungs und/oder Entrußungstemperatur, bei dem der Katalysator (5) zu Beginn der Desulfatisierungs- und/oder Entrußungsphase als Regenerationsphase auf eine Desulfatisierungs- und/oder Entrußungstemperatur als Regenerationstemperatur aufgeheizt wird. Erfindungsgemäß wird dem Katalysator (5) zu dessen direkter Aufheizung auf Regenerationstemperatur zeitweise ein fetter Abgasstrom zugeführt dergestalt, dass die unverbrannten Abgaskomponenten, insbesondere die Kohlenwasserstoffe und Kohlenmonoxide, mit dem in einem Sauerstoffspeicher des Katalysators (5) gespeicherten Sauerstoff reagieren und die dabei freiwerdende Wärmeenergie den Katalysator (5) auf Regenerationstemperatur erhitzt. Ferner wird ein Katalysator (5) vorgeschlagen, bei dem der Sauerstoffspeicher in Strömungsrichtung des Abgases, vorzugsweise axial, ungleichmäßig über den Katalysator (5) verteilt ist dergestalt, dass in Strömungsrichtung gesehen am Abgaseintritt des Katalysators (5) die höchste Sauerstoffspeicherfähigkeit vorhanden ist. Dadurch wird eine homogene Aufheizung des Katalysators (5) möglich.

## Beschreibung

Die Erfindung betrifft ein Verfahren zur Aufheizung eines in einer Abgasanlage einer Diesel-Brennkraftmaschine eines Fahrzeuges, insbesondere eines Kraftfahrzeuges, angeordneten Katalysators und/oder Partikelfilters auf Desulfatisierungs- und/oder Entrußungstemperatur insbesondere eines Stickoxid-Speicherkatalysators, nach dem Oberbegriff des Anspruchs 1 sowie einen Katalysator, insbesondere einen Stickoxid-Speicherkatalysator, für Abgasanlagen von Brennkraftmaschinen von Fahrzeugen, insbesondere von Kraftfahrzeugen, nach dem Oberbegriff des Anspruchs 10.

Es ist allgemein bekannt, dass in Abgasanlagen von Diesel-Brennkraftmaschinen eines Kraftfahrzeugs Stickoxid-Speicherkatalysatoren eingesetzt werden. Sobald die Speicherfähigkeit von Stickoxiden im Stickoxid-Speicherkatalysator erschöpft ist, wird eine Regeneration der Stickoxid-Speicherkatalysatoren durchgeführt, bei der die Brennkraftmaschine für eine gewisse Zeit fett betrieben wird. Bei diesem fetten Betrieb werden die Stickoxide wieder freigesetzt und aufgrund der dann im fetten Abgas vorhandenen Reduktionsmittel (insbesondere von CO und HC) zu Stickstoff reduziert.

Dadurch, dass derartige Stickstoff-Speicherkatalysatoren aber auch zur Schwefelspeicherung durch Bildung eines entsprechenden Sulfates neigen, ergibt sich in Verbindung mit derartigen Stickoxid-Speicherkatalysatoren das Problem der Schwefelvergiftung. Diese Vergiftung des Stickoxid-Speicherkatalysators ist unerwünscht, so dass ein derart mit Schwefel vergifteter Stickoxid-Speicherkatalysator wieder regeneriert werden muss. Dazu wird eine sog. Desulfatisierung durchgeführt, bei der der Stickoxid-Speicherkatalysator auf eine Desulfatisierungs-Mindesttemperatur von >550°C aufgeheizt werden muss.

Bei Diesel-Brennkraftmaschinen ist neben der Entfernung von Stickoxiden auch die Entfernung von Partikeln aus dem Abgas von Bedeutung. Zu diesem Zweck werden Partikelfilter, die auch als Rußfilter bezeichnet werden, in die Abgasanlage, insbesondere mit einem Stickoxid-Speicherkatalysator kombiniert. Auch diese Partikel- oder Rußfilter müssen von Zeit zu Zeit regeneriert werden, um sie von abgelagerten Partikeln zu befreien. Auch für dieses Freibrennen des Rußfilters sind regelmäßig Temperaturen von >550°C erforderlich.

Zur Aufheizung eines derartigen Katalysators einer Abgasanlage einer Diesel-Brennkraftmaschine eines Kraftfahrzeuges ist aus der gattungsbildenden DE 101 26 455 A1 bereits ein Verfahren zur Desulfatisierung und/oder Entrußung eines derartigen Katalysators bekannt, bei dem der Katalysator vor Beginn der Desulfatisierungs- und/oder Entrußungsphase als Regenerationsphase auf eine Desulfatisierungs- und/oder Entrußungstemperatur als Regenerationstemperatur aufgeheizt wird.

Konkret wird hier die Aufheizung des Stickoxid-Speicherkatalysators durch einen mageren Brennkraftmaschinenbetrieb und durch eine der Haupteinspritzung des Kraftstoffs folgende Nacheinspritzung des Kraftstoffs in den Brennraum der Brennkraftmaschine vorgenommen. Durch diese Nacheinspritzung wird in den mageren Abgasstrom, der dem als Stickoxid-Speicherkatalysator ausgebildeten Katalysator zugeführt wird, ein Restgehalt an unverbranntem Kraftstoff zugeführt, so dass aufgrund des im mageren Abgasstromes vorhandenen Sauerstoffüberschusses mit dem nacheingespritzten unverbrannten Kraftstoff in diesem Abgasstrom unter insgesamt noch mageren Abgasbedingungen eine exotherme Oxidation des unverbrannten Kraftstoffs stattfindet und dadurch das Abgas aufgeheizt wird. Dieses so aufgeheizte Abgas strömt dann durch den Stickoxid-Speicherkatalysator und heizt diesen auf Regenerationstemperatur auf. Es findet somit hier eine indirekte Aufheizung des Katalysators über den zuvor erhitzten mageren Abgasstrom statt.

Aufgabe der Erfindung ist es, ein alternatives Verfahren zur Aufheizung eines in einer Abgasanlage einer Diesel-Brennkraftmaschine eines Fahrzeuges, insbesondere eines Kraftfahrzeuges, angeordneten Katalysators, insbesondere eines Stickoxid-Speicherkatalysators oder Partikelfilters, auf Desulfatisierungs- und/oder Entrußungstemperatur zur Verfügung zu stellen, mit dem die eine Aufheizung auf Regenerationstemperatur auf einfache und funktionssichere Weise durchgeführt werden kann. Ferner ist es eine weitere Aufgabe der Erfindung, einen Katalysator, insbesondere einen Stickoxid-Speicherkatalysator, für Abgasanlagen von Brennkraftmaschinen von Fahrzeugen, insbesondere von Kraftfahrzeugen, zu schaffen, der möglichst homogen aufheizbar ist.

Diese Aufgabe wird bezüglich des Verfahrens gelöst mit den Merkmalen des Anspruchs 1.

Gemäß Anspruch 1 wird dem Katalysator zu dessen direkter Aufheizung auf Regenerationstemperatur zeitweise ein fetter Abgasstrom zugeführt dergestalt, dass die unverbrannten Abgaskomponenten, insbesondere die Kohlenwasserstoffe und Kohlenmonoxide, mit dem in einem Sauerstoffspeicher des Katalysators gespeicherten Sauerstoff reagieren und die dabei freiwerdende Wärmeenergie den Katalysator auf Regenerationstemperatur erhitzt.

Mit einer derartigen Verfahrensführung wird auf einfache und funktionssichere Weise eine direkte Aufheizung des Katalysators erzielt, d. h., dass im Gegensatz zum gattungsbildenden Stand der Technik keine unmittelbare Aufheizung des Speicherkatalysators durch den aufgeheizten Abgasstrom erfolgt. Die Wärmeverluste bei dieser direkten Aufheizung des Katalysators sind hierbei zudem wesentlich geringer als bei der indirekten Aufheizung gemäß dem gattungsbildenden Stand der Technik.

Gemäß einer besonders bevorzugten Verfahrensführung nach Anspruch 2 wird dem Katalysator zur Aufheizung auf Regenerationstemperatur in Abhängigkeit vom Sauerstoff-Füllgrad des Sauerstoffspeichers des Katalysators wechselweise ein magerer und fetter Abgasstrom zugeführt. Dabei wird das Umschalten von einem mageren auf einen fetten Abgasstrom jeweils zu einem ersten Umschalt-Zeitpunkt vorgenommen, zu dem der Sauerstoffspeicher im wesentlichen voll gefüllt ist, während das Umschalten von einem fetten auf einen mageren Abgasstrom jeweils zu einem solchen zweiten Umschalt-Zeitpunkt vorgenommen wird, zu dem der Sauerstoffspeicher im wesentlichen entleert ist. Durch diese Abstimmung des Brennwerteintrags in die Abgasanlage während der fetten Betriebsphase auf die Umsetzung des gesamten Sauerstoffspeichers des Katalysators wird vorteilhaft ein einfaches und auch funktionssicher zu überwachendes Umschaltkriterium zwischen den einzelnen Fett- und Magerphasen erhalten.

Die frei werdende Reaktionswärme pro Zeiteinheit ist umso größer, je schneller der Sauerstoffspeicher des Katalysators gefüllt bzw. wieder entleert werden kann. Zur Erfüllung dieser Forderung ist nach Anspruch 3 ein großer Lambdahub sowohl im fetten wie auch mageren Betrieb erforderlich. Dabei können ferner nach Anspruch 4 die aufeinanderfolgenden Lambdahübe jeweils wenigstens bereichsweise gleich sein. Dies bedeutet, dass die Lambdahübe beim mageren Umschalten von einem fetten auf einen mageren Abgasstrom jeweils gleich sein können, und dass ebenso die Lambdahübe beim Umschalten von einem mageren auf einen fetten Abgasstrom jeweils gleich sein können, die Hubwerte des fetten und mageren Umschaltens jedoch zueinander unterschiedlich sein können.

Nach Anspruch 5 beträgt der Lambdawert des fetten Abgasstroms höchstens in etwa λ = 0,6, vorzugsweise in etwa λ = 0,8 bis 0,95, während der Lambdawert des mageren Abgasstroms wenigstens λ = 1,2, vorzugsweise in etwa λ = 1,5 bis 3,5 beträgt. Damit lassen sich zufriedenstellende Verfahrensführungen erzielen.

Gemäß einer weiteren bevorzugten Verfahrensführung nach Anspruch 6 ist vorgesehen, dass der Sauerstoffspeicher zur Erzielung einer homogenen Katalysatoraufheizung in Strömungsrichtung des Abgases, vorzugsweise axial, ungleichmäßig über den Katalysator verteilt ist, und zwar dergestalt, dass in Strömungsrichtung gesehen am Abgaseintritt des Katalysators die höchste Sauerstoffspeicherfähigkeit vorhanden ist. Diese Verteilung führt zu dem gewünschten Effekt, dass die Reaktionswärmeumsetzung schwerpunktmäßig am Beginn des Katalysators stattfindet und die Wärme anschließend über den Stofftransport durch den Katalysator selbst geführt wird. Dies führt ersichtlich zu einer homogeneren Temperaturverteilung in axialer Richtung des Katalysators.

Besonders bevorzugt ist die erfindungsgemäße Verfahrensführung bei einer Abgasanlage, bei der der Katalysator ein Hauptkatalysator, vorzugsweise ein Unterbodenkatalysator ist, dem wenigstens ein Vorkatalysator, vorzugsweise ein Drei-Wege-Katalysator, vorgeschalten ist. Bei einem derartigen vorgeschalteten Vorkatalysator ist gemäß einer bevorzugten Verfahrensführung nach Anspruch 8 vorgesehen, dass zur Minimierung der exothermen Reaktion im Vorkatalysator das Motorlambda in etwa bei λ = 1 eingestellt wird. Denn für die Minimierung der exothermen Reaktion im Vorkatalysator sollte der Restsauerstoff nach der Verbrennung so gering wie möglich gehalten werden, d. h. das Motorlambda sollte sich im Bereich von kleiner oder gleich 1 bewegen.

Gemäß Anspruch 9 ist vorgesehen, dass zur weiteren Anfettung des von der Brennkraftmaschine kommenden fetten Abgasstroms in diesen ein Kraftstoff nacheingespritzt wird. Mit einer derartigen Verfahrensführung wird dem Dieselmotorprinzip Rechnung getragen, bei dem der Fettbetrieb durch den motorischen Betrieb begrenzt ist. Eine Möglichkeit diese Problem zu Minimieren kann deshalb vorteilhaft darin bestehen, das Abgaslambda durch eine gezielte Nacheinspritzung nach der eigentlichen Verbrennung zusätzlich mit Kraftstoff anzureichern und somit dem Abgas zusätzlich unverbrannten Kraftstoff zuzuführen.

Die Aufgabe wird bezüglich des Katalysators mit den Merkmalen des Anspruchs 10 gelöst.

Gemäß Anspruch 10 ist der Sauerstoffspeicher in Strömungsrichtung des Abgases, vorzugsweise axial, ungleichmäßig über den Katalysator verteilt dergestalt, dass in Strömungsrichtung gesehen am Abgaseintritt des Katalysators die höchste Sauerstoffspeicherfähigkeit vorhanden ist.

Insbesondere in Verbindung mit einer Verfahrenführung nach einem der zuvor behandelten Verfahrensansprüche lässt sich dadurch auf einfachste Weise eine homogene Aufheizung des Katalysators erreichen, da diese Verteilung zu dem gewünschten Effekt führt, dass die Reaktionswärmeumsetzung schwerpunktmäßig am Beginn des Katalysators stattfindet und die Wärme anschließend über den Stofftransport durch das Katalysatorbauteil geführt wird. Das führt zu einer homogeneren Temperaturverteilung in z. B. axialer Richtung des Bauteils.

Grundsätzlich kann ein derartiger Katalysator auch bei Otto-Brennkraftmaschinen Verwendung finden. Für den Einsatz in Diesel-Brennkraftmaschinen ist dann vorteilhaft nach Anspruch 11 in den Katalysator noch ein Partikelfilter, z. B. ein Rußfilter, zu integrieren. Für Rußfilter mit Sauerstoffspeicher ist das Verfahren entsprechend anzuwenden.

Die Erfindung wird nachfolgend anhand einer Zeichnung näher erläutert.

Es zeigen:
- Fig. 1: den schematischen Aufbau einer Abgasanlage einer Diesel-Brennkraftmaschine,
- Fig. 2: schematisch den erfindungsgemäßen zyklischen Fett-Mager-Wechselbetrieb zur direkten Aufheizung des Katalysators auf Regenerationstemperatur in Abhängigkeit vom Sauerstoffspeicher der in der Abgasanlage angeordneten Katalysatoren, und
- Fig. 3: schematisch den Verlauf der Temperatur und des Reduktionsmittels HC über die Länge der Abgasanlage.

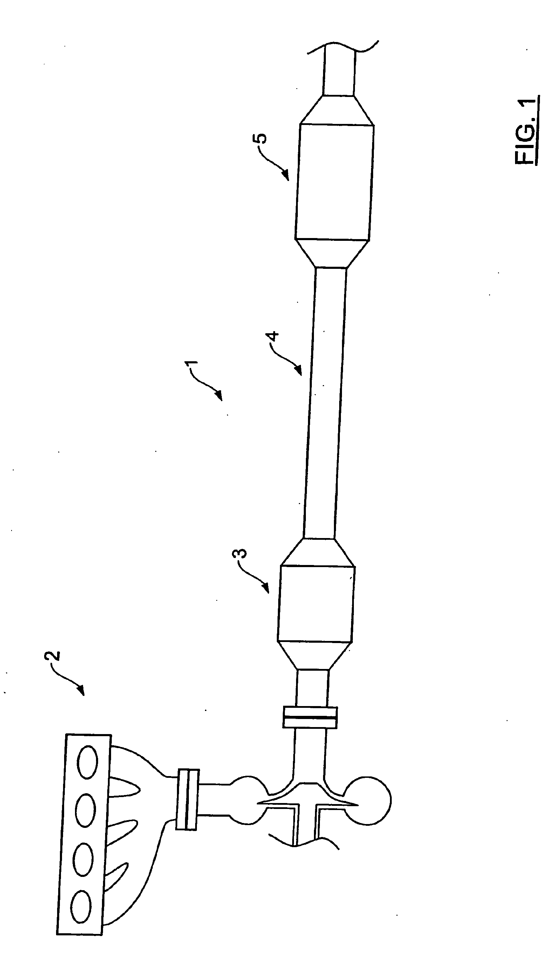

In Fig. 1 ist schematisch der Aufbau einer Abgasanlage 1 für eine Diesel-Brennkraftmaschine 2 gezeigt, wobei der Diesel-Brennkraftmaschine 2 ein motornaher Vorkatalysator 3, z. B. ein Drei-Wege-Katalysator nachgeschaltet ist, der über ein Abgaszwischenrohr 4 mit einem Hauptkatalysator 5 strömungsverbunden ist. Dieser Hauptkatalysator 5 ist hier demnach als Unterbodenkatalysator ausgebildet und weist sowohl einen hier nicht im Detail dargestellten Stickoxid-Speicherkatalysator als auch einen Partikelfilter bzw. Rußfilter auf. Dieser Hauptkatalysator 5 weist ferner einen Sauerstoffspeicher auf, der hier ebenfalls nicht dargestellt ist, der in Strömungsrichtung des Abgases axial gesehen ungleichmäßig über den Katalysator 5 verteilt ist, und zwar dergestalt, dass in Strömungsrichtung gesehen am Abgaseintritt des Hauptkatalysators 5 die höchste Sauerstoffspeicherfähigkeit gegeben ist. Auch der Vorkatalysator 3 weist einen Sauerstoffspeicher auf.

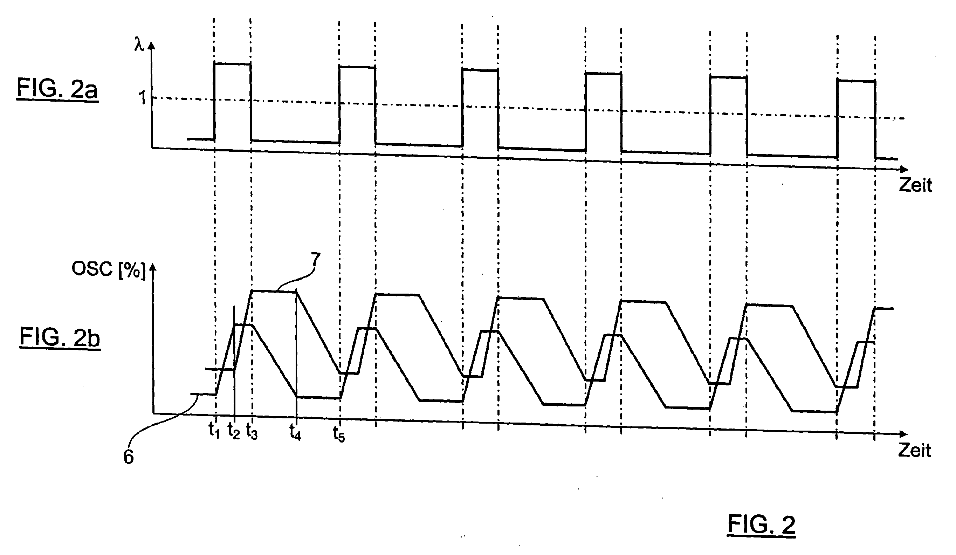

Die erfindungsgemäße Verfahrensführung ist in der Fig. 2 dargestellt, wobei Fig. 2a den zyklischen Wechsel zwischen einem fetten und einem mageren Abgasstrom zur Aufheizung des Hauptkatalysators 5 auf Desulfatisierungs- bzw. Entrußungstemperatur als Regenerationstemperatur in Abhängigkeit von dem in der Fig. 2b dargestellten Sauerstoffgehalt in den Sauerstoffspeichern des Vorkatalysators 3 und des Hauptkatalysators 5 zeigt.

Die Kurve 6 repräsentiert dabei den Verlauf des Sauerstoffspeichergehalts im Vorkatalysator 3, während die Kurve 7 den Verlauf des Sauerstoffspeichergehalts im Hauptkatalysator 5 darstellt.

Wie den Fig. 2a und 2b nunmehr im Detail zu entnehmen ist, wird zum Zeitpunkt t1 von der Brennkraftmaschine kommend ein magerer Abgasstrom den beiden Katalysatoren 3,5 zugeführt, was bis zum Zeitpunkt t2 die Folge hat, dass sich der Sauerstoffspeicher des Vorkatalysators 3 auflädt. Sobald der Sauerstoffspeicher des Vorkatalysators 3 voll ist, wird im weiteren Verlauf dieser Magerbetriebsphase der Sauerstoffspeicher des Hauptkatalysators 5 aufgefüllt. Zum Zeitpunkt t3 ist der Sauerstoffspeicher des Hauptkatalysators 5 gefüllt, so dass nunmehr vom mageren Abgasstrom auf den fetten Abgasstrom umgeschalten wird. Zu Beginn dieser Fettphase wird zuerst bis zum Zeitpunkt t4 der Sauerstoffspeicher des motornahen Vorkatalysators 3 geleert. Der Sauerstoffspeichergehalt des Hauptkatalysators 5 bleibt während dieser Zeitspanne zwischen t3 und t4 konstant. Nach dem Entleeren des Sauerstoffspeichers des Vorkatalysators 3 wird dann bis zum Zeitpunkt t5 der Sauerstoffspeicher des Hauptkatalysators 5 entleert, was gleichzeitig wiederum das Kriterium dafür ist, von der Fettphase auf die Magerphase, d. h. auf einen mageren Abgasstrom zur Befüllung der Sauerstoffspeicher umzuschalten. Dieser Zyklus wiederholt sich während der gesamten Aufheizphase.

Die Lambdahübe beim Übergang zwischen dem fetten und mageren Abgasstrom als auch beim Übergang zwischen dem mageren und dem fetten Abgasstrom entsprechen in etwa einem Lambdawert von wenigstens 1.

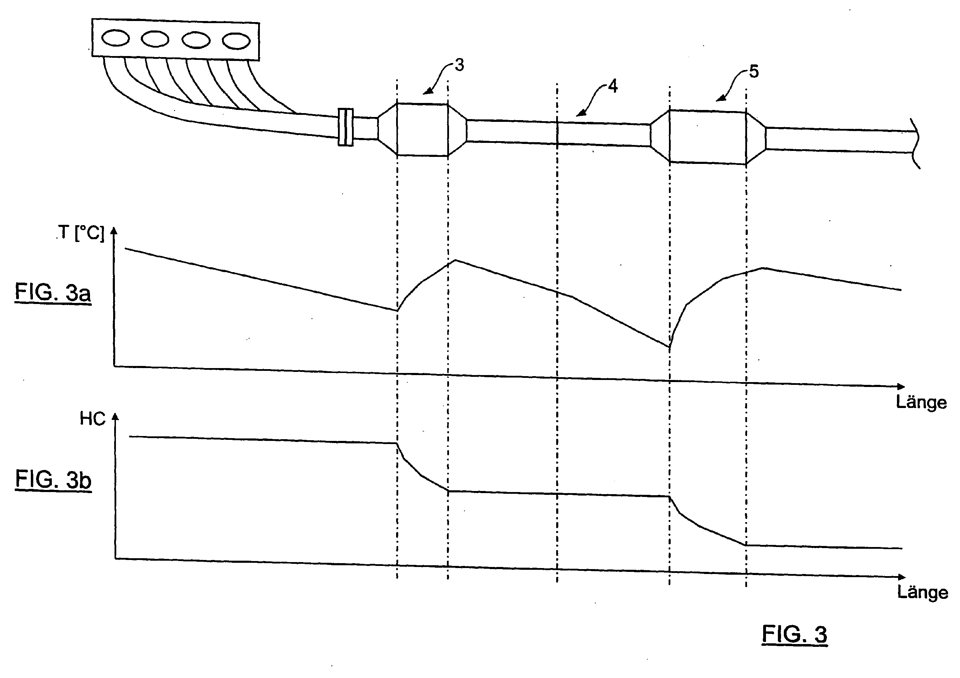

Durch das Entleeren des Sauerstoffspeichers im Hauptkatalysator 5 können dort die im fetten Abgasstrom vorhandenen Abgaskomponenten, insbesondere die Kohlenwasserstoffe und die Kohlenmonoxide, miteinander reagieren, wobei die dabei frei werdende Wärmeenergie dann zur direkten Aufheizung des Hauptkatalysators 5 auf Regenerationstemperatur genutzt werden kann. Dieser Temperaturverlauf in Abhängigkeit von der Reduktion der Abgaskomponente HC ist schematisch in den Fig. 3a und 3b über die Länge der Abgasanlage 1 gezeigt. Den Fig. 3a und 3b ist zu entnehmen, dass die Temperatur des Abgasstroms bis zum Vorkatalysator 3 abnimmt, wobei hier logischer Weise der Gehalt an der im fetten Abgasstrom vorhandenen Schadstoffkomponente HC konstant bleibt. Im Vorkatalysator 3 findet dann eine Reduktion der Kohlenwasserstoffe (HC) unter Sauerstoffverbrauch des im Sauerstoffspeicher des Vorkatalysators 3 gespeicherten Sauerstoffes statt, was gleichzeitig dazu führt, dass durch die exotherme Reaktion der Abgasstrom aufgeheizt wird, wie das der Fig. 3a zu entnehmen ist. Anschließend sinkt im weiteren Verlauf der Strömung über das Abgaszwischenrohr 4 die Temperatur bis zum Eintritt in den Hauptkatalysator wieder ab, wobei der Gehalt an Reduktionsmittel HC im fetten Abgasstrom konstant bleibt. Im Hauptkatalysator 5 findet dann unter gleichzeitiger Entleerung des Sauerstoffspeichers des Hauptkatalysators 5 eine exotherme Reaktion statt, in der das Reduktionsmittel durch den Sauerstoff verbrannt wird, wobei die freiwerdende Wärmeenergie den Hauptkatalysator 5 auf Regenerationstemperatur aufheizt.

Erfindungemäß kann somit durch eine gezielte Veränderung des Abgaslambda zwischen fett und mager möglich gemacht werden, Abgas mit unverbrannten Abgaskomponenten durch den Vorkatalysator hindurch bis in den Unterbodenbereich zu transportieren, um dort den Hauptkatalysator 5 direkt aufzuheizen.

## Patentansprüche

1. Verfahren zur Aufheizung eines in einer Abgasanlage einer Diesel-Brennkraftmaschine eines Fahrzeuges, insbesondere eines Kraftfahrzeuges, angeordneten Katalysators, insbesondere eines Stickoxid-Speicherkatalysators oder Partikelfilters, auf Desulfatisierungs und/oder Entrußungstemperatur
bei dem der Katalysator zu Beginn der Desulfatisierungs- und/oder Entrußungsphase als Regenerationsphase auf eine Desulfatisierungsund/oder Entrußungstemperatur als Regenerationstemperatur aufgeheizt wird,
**dadurch gekennzeichnet,**
**dass** dem Katalysator (5) zu dessen direkter Aufheizung auf Regenerationstemperatur zeitweise ein fetter Abgasstrom zugeführt wird dergestalt, dass die unverbrannten Abgaskomponenten, insbesondere die Kohlenwasserstoffe und Kohlenmonoxide, mit dem in einem Sauerstoffspeicher des Katalysators (5) gespeicherten Sauerstoff reagieren und die dabei frei werdende Wärmeenergie den Katalysator (5) auf Regenerationstemperatur erhitzt.

2. Verfahren nach Anspruch 1, **dadurch gekennzeichnet, dass** dem Katalysator (5) zur Aufheizung auf Regenerationstemperatur in Abhängigkeit vom Sauerstoff-Füllgrad des Sauerstoffspeichers des Katalysators (5) wechselweise ein magerer und fetter Abgasstrom zugeführt wird dergestalt, dass das Umschalten von einem mageren auf einen fetten Abgasstrom jeweils zu einem ersten Umschalt-Zeitpunkt vorgenommen wird, zu dem der Sauerstoffspeicher im wesentlichen voll gefüllt ist und dass das Umschalten von einem fetten auf einen mageren Abgasstrom jeweils zu einem zweiten Umschalt-Zeitpunkt vorgenommen wird, zu dem der Sauerstoffspeicher im wesentlichen entleert ist.

3. Verfahren nach Anspruch 2, **dadurch gekennzeichnet, dass** beim Übergang zwischen fetten und mageren Abgasstrom und ebenso beim Übergang zwischen mageren und fetten Abgasstrom ein großer Lambdasprung in der Größenordnung von wenigstens λ = 1, bevorzugt von wenigstens λ = 1,5, als Lambdahub vorgenommen wird.

4. Verfahren nach Anspruch 3, **dadurch gekennzeichnet, dass** die aufeinanderfolgenden Lambdahübe jeweils wenigstens bereichsweise gleich sind.

5. Verfahren nach Anspruch 3 oder Anspruch 4, **dadurch gekennzeichnet,**
**dass** der Lambdawert des fetten Abgasstroms höchstens λ = 0,6, vorzugsweise in etwa λ = 0,8 bis 0,95 beträgt, und
**dass** der Lambdawert des mageren Abgasstroms wenigstens λ = 1,2, vorzugsweise in etwa λ = 1,5 bis 3,5 beträgt.

6. Verfahren nach einem der Ansprüche 1 bis 5, **dadurch gekennzeichnet, dass** der Sauerstoffspeicher zur Erzielung einer homogenen Katalysatoraufheizung in Strömungsrichtung des Abgases, vorzugsweise axial, ungleichmäßig über den Katalysator (5) verteilt ist dergestalt, dass in Strömungsrichtung gesehen am Abgaseintritt des Katalysators (5) die höchste Sauerstoffspeicherfähigkeit vorhanden ist.

7. Verfahren nach einem der Ansprüche 1 bis 6, **dadurch gekennzeichnet, dass** der Katalysator ein Hauptkatalysator (5) vorzugsweise ein Unterbo denkatalysator ist, dem wenigstens ein Vorkatalysator (3), vorzugsweise ein Drei-Wege-Katalysator, vorgeschalten ist.

8. Verfahren nach Anspruch 7, **dadurch gekennzeichnet, dass** zur Minimierung der exothermen Reaktion im Vorkatalysator (3) das Motorlambda in etwa bei λ = 1 eingestellt wird.

9. Verfahren nach einem der Ansprüche 1 bis 8, **dadurch gekennzeichnet, dass** zur weiteren Anfettung des von der Brennkraftmaschine (2) kommenden fetten Abgasstroms in diesen ein Kraftstoff nacheingespritz wird.

10. Katalysator, insbesondere Stickoxid-Speicherkatalysator für Abgasanlagen von Brennkraftmaschinen von Fahrzeugen, insbesondere von Kraftfahrzeugen, insbesondere zur Verwendung in einem der Verfahren nach einem der Ansprüche 1 bis 9, mit einem Sauerstoffspeicher, **dadurch gekennzeichnet, dass** der Sauerstoffspeicher des Abgases vorzugsweise axial, ungleichmäßig über den Katalysator (5) verteilt ist dergestalt, dass in Strömungsrichtung gesehen am Abgaseintritt des Katalysators (5) die höchste Sauerstoffspeicherfähigkeit vorhanden ist.

11. Katalysator nach Anspruch 10, **dadurch gekennzeichnet, dass** in den Katalysator (5) ein Partikelfilter integriert ist.
